# EUROPÄISCHE PATENTANMELDUNG

(11) **EP 1 728 807 A1**
(43) Veröffentlichungstag der Anmeldung: **06.12.2006**
(21) Anmeldenummer: 05104678.7
(22) Anmeldetag: 31.05.2005
(51) Int. Cl.: C08G 18/10, C09J 175/04, C09J 5/06

(54) **Wasserenthaltender zweikomponentiger Heissschmelzklebstoff**

(71) Anmelder: Sika Technology AG, 6340 Baar (CH)
(72) Erfinder: Krause, Sven, 21037, Hamburg (DE); Paschkowski, Kai, 21635, Jork (DE); Linnenbrink, Martin, 21641, Apensen (DE)
(74) Vertreter: Isler, Jörg

(57) **Zusammenfassung**

Die vorliegende Erfindung betrifft zweikomponentige Heissschmelzklebstoffe bestehend aus zwei Komponenten **K1** und **K2**.

Die Komponente **K1** enthält mindestens ein Prepolymer, welches mindestens zwei feuchtigkeitsreaktive Gruppen, insbesondere Alkoxysilan- und/oder Isocyanat-Gruppen, aufweist und welches bei Raumtemperatur fest ist. Die Komponente **K2** enthält mindestens Wasser.

Weiterhin werden Verfahren zur Applikation des Heissschmelzklebstoffes sowie dessen Verwendung als Montageklebstoffs oder dessen Verwendung in der Herstellung von Sandwich-Pannels und die daraus hergestellten Verbundkörper offenbart.

## Beschreibung

### Technisches Gebiet

Die Erfindung betrifft das Gebiet der Heissschmelzklebstoffe.

### Stand der Technik

Heissschmelzklebstoffe (Hotmelts) sind bekannte Klebstoffe. Derartige Klebstoffe sind bei Raumtemperatur feste und lösungsmittelfreie Klebstoffe und werden aufgeschmolzen und als Schmelze auf das zu verklebende Substrat aufgetragen. Im Gegensatz zu den sogenannten Warmschmelzklebstoffen (Warmmelts), welche pastöse Klebstoffe darstellen und bei leicht erhöhten Temperaturen bis typischerweise 60 °C appliziert werden, erfolgt die Applikation der Heissschmelzklebstoffe bei Temperaturen ab 85°C. Durch die Abkühlung bedingt, verfestigen sich die Klebstoffe. Klassische Heissschmelzklebstoffe sind nicht reaktive Klebstoffe, wodurch diese bei erneuter Temperaturerhöhung erneut erweichen bzw. aufschmelzen. Dies ist jedoch üblicherweise nicht erwünscht, weil Verklebungen mit einem derartigen Heissschmelzklebstoff nicht für einen Einsatz bei erhöhter Temperatur geeignet sind, weil sie erweichen und dadurch ein verlässlicher Verbund nicht gewährleistet werden kann.

Dieser Nachteil wurde bei den sogenannten reaktiven Heissschmelzklebstoffen durch das Einbringen von vernetzenden Gruppen in die Polymerstruktur weitgehend behoben. Als reaktive Gruppen haben sich insbesondere Isocyanat-Gruppen als sehr geeignet erwiesen. Derartige Isocyanat-Gruppen aufweisende Heissschmelzklebstoffe werden als reaktive Polyurethan-Heissschmelzklebstoffe bezeichnet. Durch das Abkühlen erfolgt zuerst der Aufbau der für Heissschmelzklebstoffe typische Frühfestigkeit. Anschliessend erfolgt eine Vernetzung der Polymere durch die Reaktion der Isocyanat-Gruppen mittels Wasser. Durch diese Vernetzung bedingt, sind derartige Klebstoffe auch bei erhöhter Temperatur einsetzbar.

Derartige reaktive Polyurethan-Heissschmelzklebstoffe sind bekannt, beispielsweise aus EP-A-0 244 608 oder US 5,155,180 oder EP-A-1 036 103 und werden kommerziell breit eingesetzt.

Es sind auch einkomponentige Polyurethan-Klebstoffe kommerziell erhältlich, zur deren Beschleunigung eine wasserbasierende Komponente zugemischt werden. Diese Klebstoffe werden jedoch bei Raumtemperatur oder als Warmmelts bei leicht erhöhter Temperatur angewendet und sind demzufolge keine Heissschmelzklebstoffe.

Es hat sich jedoch gezeigt, dass der durch die Vernetzung bedingte Festigkeitsaufbau bei reaktiven Heissschmelzklebstoffen langsam ist und für viele Anwendungen, insbesondere in Montageanwendungen, oft unzureichend ist. Weiterhin ist die Vernetzung durch die Diffusion der Luftfeuchtigkeit bedingt. Der Festigkeitsaufbau ist somit abhängig von den Umgebungsbedingungen wie Temperatur und relativer Luftfeuchtigkeit, was sich insbesondere bei dickschichtigen oder verdeckten Verklebungen nachteilig auswirkt.

### Darstellung der Erfindung

Die Aufgabe der vorliegenden Erfindung ist es daher, einen Heissschmelzklebstoff zur Verfügung zu stellen, welcher einen schnellen Festigkeitsaufbau erlaubt und welcher insbesondere unabhängig von den bei der Aushärtung herrschenden Umgebungsluftfeuchtebedingungen verlässlich aushärtet und somit die Nachteile des Standes des Technik überwindet. Überraschenderweise wurde gefunden, dass zweikomponentige feuchtigkeitshärtende Heissschmelzklebstoffe gemäss Anspruch 1 diese Aufgabe lösen.

### Wege zur Ausführung der Erfindung

Die vorliegende Erfindung betrifft zweikomponentige Heissschmelzklebstoffe bestehend aus zwei Komponenten **K1** und **K2.**

Die Komponente **K1** enthält mindestens ein Prepolymer, welches mindestens zwei feuchtigkeitsreaktive Gruppen, insbesondere Alkoxysilan-und/oder Isocyanat-Gruppen, aufweist und welches bei Raumtemperatur fest ist. Die Komponente **K2** enthält mindestens Wasser.

Das Prepolymer kann kristallin oder amorph sein. Bevorzugt ist das Prepolymer kristallin. Das Prepolymer enthält mindestens zwei feuchtigkeitsreaktive Gruppen. Diese Gruppen reagieren mit Wasser unter Bildung einer Species die zur Vernetzung von zwei oder mehreren derartigen Gruppen führt. Bevorzugt sind diese feuchtigkeitsreaktiven Gruppen Alkoxysilan- Gruppen und / oder Isocyanat-Gruppen.

In einer ersten Ausführungsform handelt es sich beim Prepolymer mit mindestens zwei feuchtigkeitsreaktiven Gruppen um ein Polyurethanprepolymer mit mindestens zwei Isocyanat-Gruppen.

Es wird aus der Umsetzung eines Polyisocyanates mit einer Verbindung, welche zwei oder mehrere NCO-reaktive funktionelle Gruppen aufweist. Derartige NCO-reaktive Gruppen sind insbesondere Hydroxyl- und primäre oder sekundäre Amino-Gruppen.

Ein Polyisocyanat enthält zwei oder mehrere NCO-Gruppen und beschreibt hier ein niedermolekulare Verbindung mit einem Molekulargewicht von unter 1000 g/mol. Beispiele für derartige Polyisocyanate sind 2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, Oligomere und Polymere der vorgenannten Isocyanate, sowie beliebige Mischungen der vorgenannten Isocyanate. Besonders bevorzugt als Polyisocyanate sind MDI und TDI.

Als Verbindung, welche zwei oder mehrere NCO-reaktive funktionelle Gruppen aufweist, gelten insbesondere polymere Verbindungen.

Beispiele für derartige polymere Verbindungen sind insbesondere Polyole, Polyamine, Polyaminoalkohole zu nennen.

Beispiele für geeignete Polyamine sind aliphatische Polyamine wie Ethylendiamin, 1,2- und 1,3-Propandiamin, 2-Methyl-1,2-propandiamin, 2,2-Dimethyl-1,3-propandiamin, 1,3- und 1,4-Butandiamin, 1,3- und 1,5-Pentandiamin, 1,6-Hexandiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 3,9-Bis-(3-aminopropyl)-2,4,8,10-tetraoxaspiro[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine^{®} (hergestellt von Huntsman Chemicals), aromatische Amine, wie beispielsweise 3,5-Diethyl-2,4(2,6)-diaminotoluol (Lonzacure DETDA®), 3,5-Dimethylthiotoluylendiamin (Ethacure 300®), 4,4'-Methylen-bis-(2,6-diethylanilin) (MDEA), 4,4'-Methylen-bis-(3-chlor-2,6-diethylanilin) (MCDEA), sowie Mischungen der vorgenannten Polyamine.

Beispiele für Polyaminoalkohole sind Diethanolamin, Ethanolamin, Triethanolamin sowie Reaktionsprodukte von Epoxiden mit Aminen, insbesondere von Diglycidylethern mit Polyaminen wie oben beschreiben.

Als Polyole sind insbesondere Polyetherpolyole, Polycarbonatdiole und Polyesterpolyole bevorzugt.

Polyetherpolyole, auch Polyoxyalkylenpolyole genannt, sind insbesondere jene, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol, sowie Polyoxypropylendiole und -triole mit einem Molekulargewicht von 400 bis 8'000 g/mol.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen. Unter ,Molekulargewicht' oder ,Molgewicht' versteht man im vorliegenden Dokument stets das Molekulargewichtsmittel Mₙ.

Als meist bevorzugte Polyetherpolyole gelten Diole mit einem Ungesättigtheitsgrad tiefer als 0.02 mEq/g und mit einem Molekulargewicht im Bereich von 7000 bis 30'000, insbesondere zwischen 10'000 und 25'000 g/mol. Beispielsweise werden derartige Polyether unter dem Handelsnamen Acclaim® von Bayer vertrieben.

Als Polyesterpolyole sind insbesondere jene geeignet, welche hergestellt sind beispielsweise aus zwei- bis dreiwertigen Alkoholen, wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole, mit organischen Dicarbonsäuren oder deren Anhydride oder Ester, wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise aus ε-Caprolacton.

Besonders bevorzugte Polyesterpolyole sind Polyesterpolyole aus Adipinsäure, Sebacinsäure oder Dodecandicarbonsäure als Dicarbonsäure und aus Hexandiol oder Neopentylglycol als zweiwertigen Alkohol. Die Polyesterpolyole weisen bevorzugt ein Molekulargewicht von 1500 bis 15'0000 g/mol, insbesondere von 1500 bis 8000 g/mol, bevorzugt von 2000 bis 5500 g/mol, auf.

Besonders bevorzugte Polyesterpolyole sind Adipinsäure/Hexandiol-Polyester und Dodecandicarbonsäure/Hexandiol-Polyester.

Als Verbindung, welche zwei oder mehrere NCO-reaktive funktionelle Gruppen aufweist, sind bevorzugt Polyole. Als Polyole sind insbesondere Polyesterpolyole und Polyetherpolyole bevorzugt. Als meist bevorzugt gelten Polyesterpolyole.

Die Herstellung der Polyurethanprepolymere erfolgt in einer bekannten Art und Weise direkt aus den Polyisocyanaten und den NCO-reaktiven Verbindungen, beispielsweise den Polyolen, oder durch schrittweise Adduktionsverfahren, wie sie auch als Kettenverlängerungsreaktionen bekannt sind.

Wesentlich ist, dass die gebildeten Polyurethanprepolymere freie Isocyanat-Gruppen aufweisen und bei Raumtemperatur fest sind. Die Anzahl der Isocyanat-Gruppen ist sehr abhängig von den gewünschten Endeigenschaften des ausgehärteten Klebstoffes.

Bevorzugt sind Polyurethanprepolymere aus Polyolen und Polyisocyanten, insbesondere aus Diolen, Triolen oder Diol/Triol-Mischungen sowie aus Diisocyanaten, Trisocyanaten oder Diisocyanat/Trisocyanat-Mischungen hergestellt.

In einer bevorzugten Ausführungsform wird das Polyurethanprepolymer über eine Reaktion von mindestens einem Polyisocyanat und mindestens einem Polyetherpolyol und/oder mindestens einem Polyesterpolyol in einem stöchiometrischen Isocyanat-Gruppen Überschuss hergestellt.

Das hierbei gebildete Polyurethanprepolymer weist ein Molekulargewicht von vorzugsweise über 2000 g/mol, insbesondere eine solches zwischen 2000 und 50'000 g/mol, bevorzugt ein solches zwischen 4000 und 30'000 g/mol.

In einer zweiten Ausführungsform handelt es sich beim Prepolymer mit mindestens zwei feuchtigkeitsreaktiven Gruppen um ein Prepolymer mit mindestens zwei Alkoxysilangruppen. Es gibt mehrere unterschiedliche Möglichkeiten zu einem derartigen Prepolymer zu gelangen.
(i) Einerseits können derartige Alkoxysilangruppen aufweisenden Prepolymere durch Hydrosilylierung eines Prepolymers mit endständigen Doppelbindungen erhalten wird. Beispielsweise geeignet sind silanfunktionelle Prepolymere, welche erhalten werden durch Polymerisation von Butadien, Isobutylen, Propylen, Butylen oder Mischungen davon, beziehungsweise durch Aufpfropfung von Polyoelfinen, und durch anschliessende Hydrosilylierung mit endständigen Doppelbindungen erhalten werden. Besonders geeignet sind silanfunktionelle Polyetherpolymere, wie sie bei der Hydrosilylierung von Polyetherpolymeren mit endständigen Doppelbindungen, insbesondere von allylterminierten Polyoxyalkylenpolymeren, wie beispielsweise in US 3,971,751 und US 6,207,766 beschrieben, erhalten werden.
(ii) Andererseits können derartige Alkoxysilangruppen aufweisenden Prepolymere erhalten werden durch die Umsetzung eines isocyanatfunktionellen Polyurethanprepolymers mit einem Silan, welches eine NCO-reaktive Gruppe aufweist, wobei das Silan in Bezug auf die Isocyanatgruppen des Polyurethanpolymers stöchiometrisch oder leicht überstöchiometrisch eingesetzt wird.
   Als Silan mit NCO-reaktiven Gruppen weisen insbesondere die Formel (I) auf, 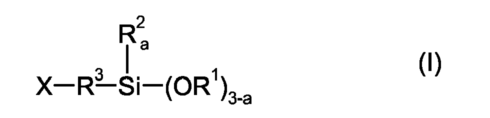 wobei R¹ für eine, gegebenenfalls substituierte, Alkyl-, Cycloalkyl-, Aryl- oder Arylalkylgruppe steht, welche gegebenenfalls Heteroatome enthalten kann, und welche weder mit Wasser oder Silan reaktive Gruppen noch Aminogruppen noch polymerisierbare Doppelbindungen enthält,
   R² für eine Alkylgruppe mit 1 bis 8 C-Atomen, bevorzugt für eine Methyl- oder für eine Ethylgruppe, insbesondere eine Methylgruppe, steht,
   R³ für eine lineare oder verzweigte, gegebenenfalls cyclische, Alkylengruppe mit 1 bis 20 C-Atomen, gegebenenfalls mit aromatischen Anteilen, und gegebenenfalls mit Heteroatomen, steht,
   X für SH oder NH-R⁴ steht, wobei
   R⁴ für H oder einen linearen oder verzweigten Kohlenwasserstoffrest mit 1 bis 20 C-Atomen, welcher gegebenenfalls cyclische Anteile aufweist, und welcher gegebenenfalls mindestens eine funktionelle Gruppe aufweist, welche ausgewählt ist aus der Gruppe umfassend Amin, Alkoxysilyl, Ether, Sulfon, Nitril, Nitro, Carbonsäureester, Sulfonsäureester und Phosphonsäureester;
   a für 0, 1 oder 2, bevorzugt für 0 oder 1, steht.
   Beispiele für geeignete Silan mit NCO-reaktiven Gruppen sind Aminosilane wie 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, 7-Amino-4-oxaheptyl-dimethoxymethylsilan; sowie die Produkte aus der Michael-artigen Addition der hier genannten primären Aminosilane an Michaelakzeptoren wie Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd; sowie Bis(trimethoxysilylpropyl)amin N-(2-Aminoethyl)-3-aminopropyl-trimethoxysilan; sowie die Analoga der genannten Silan mit Ethoxy- anstelle der Methoxygruppen am Silicium; oder Mecaptosilane, wie 3-Mercaptopropyl-trimethoxysilan, 3-Mercaptopropyl-triethoxysilan sowie 3-Mercaptopropyl-methyldimethoxysilan.
(iii) Andererseits können derartige Alkoxysilangruppen aufweisenden Prepolymere erhalten werden durch die Umsetzung eines Hydroxylgruppen enthaltenden Prepolymere mit einem isocyanatfunktionellen Silan. Diese Umsetzung erfolgt im stöchiometrischen Verhältnis zwischen Isocyanatgruppen und Hydroxylgruppen, beispielsweise bei Temperaturen von 20 °C bis 100 °C, gegebenenfalls unter Mitverwendung von Katalysatoren.
   Als isocyanatfunktionelle Silane geeignet sind Verbindungen der Formel (II), 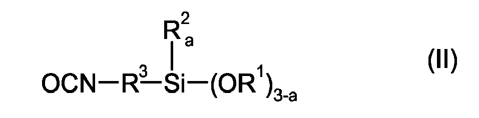 wobei R¹, R², R³ und a die gleichen Bedeutungen wie in Formel (I) aufweisen. Beispiele für geeignete Isocyanatosilane sind 3-Isocyanatopropyltrimethoxysilan, 3-Isocyanatopropyl-dimethoxymethylsilan, Isocyanatomethyltrimethoxysilan, Isocyanatomethyl-dimethoxymethylsilan, sowie deren Analoga mit Ethoxy- anstelle der Methoxygruppen am Silicium.
   Als Hydroxylgruppen enthaltenden Prepolymere eignen sich neben den für die Polyurethanprepolymer genannten Polyole und den daraus mit Diisocyanaten im Überschuss des Polyols (insbesondere [OH]/[NCO] = 1.3 / 1 bis 4 / 1, bevorzugt [OH]/[NCO] = 1.8 / 1 bis 2.1/1) hergestellten OHterminierten Polyurethanprepolymeren insbesondere auch OHfunktionalisierten Homo- oder Copolymere von olefinischen Verbindungen, wie Butadien, Isopren, Isobutylene, Propylen, Butylen oder Ethylen.
(iv) Andererseits können derartige Alkoxysilangruppen aufweisenden Prepolymere erhalten werden durch die Umsetzung eines Prepolymers enthaltend 3-Oxopropanoat Gruppen mit Aminoalklysilanen wie sie in WO 2004/056905 A1, insbesondere im Anspruch 1 und auf Seite 9 Zeile 25 - Seite 16 Zeile 4 im Detail beschrieben sind.

In einer dritten Ausführungsform handelt es sich beim Prepolymer mit mindestens zwei feuchtigkeitsreaktiven Gruppen um ein Prepolymer, welches sowohl Alkoxysilan- als auch Isocyanatgruppen aufweist. Derartige Prepolymere sind beispielsweise durch die Umsetzung eines isocyanatfunktionellen Polyurethanprepolymers mit einem Silan, welches eine NCO-reaktive Gruppe aufweist, wobei dieses Silan in Bezug auf die Isocyanatgruppen des Polyurethanprepolymers unterstöchiometrisch eingesetzt wird.

Besonders bevorzugt als Prepolymer mit mindestens zwei feuchtigkeitsreaktiven Gruppen sind Polyurethanprepolymere mit mindestens zwei Isocyanat-Gruppen. Der bevorzugte zweikomponentige Heissschmelzklebstoff ist ein zweikomponentiger Polyurethanklebstoff.

Aufgrund von anwendungstechnischen Gründen beträgt die Viskosität der Komponente **K1,** insbesondere des Prepolymers mit mindestens zwei feuchtigkeitsreaktiven Gruppen der Komponente **K1,** bei 100°C nicht weniger als 5000 mPas, bevorzugt nicht weniger als 50'000 mPas bei 100°C. Ist sie weniger als 5000 mPas, ist die Frühfestigkeit nach dem Abkühlen eher zu gering. Dem Fachmann ist klar, dass die obere Grenze der Viskosität bei 100°C je nach Applikationstemperatur des Heissschmelzklebstoffes variiert. Als bevorzugt gilt, dass der Heissschmelzklebstoffes bei der Applikationstemperatur eine Viskosität hat, die gewährleistet, dass er eine sinnvolle Applikation ermöglicht, das heisst, dass er einerseits nicht zu dünn ist, so dass er zu stark abläuft, aber andererseits auch nicht zu dick ist, als dass er mit üblichen Heissschmelzklebstoff-Applikationsgeräten aufgetragen werden könnte.

Es kann besonders vorteilhaft sein, wenn die Komponente **K1** Polyaldimine enthalten, welche im Kontakt mit dem Wasser der Komponente K2 Polyamine freisetzen. Bevorzugte derartige Polyaldimine sind geruchsfrei und setzen keine riechbaren Aldehyde frei. Derartig bevorzugte Polyaldimine sind in EP-A-1 384 709 beschrieben.

Je nach Bedürfnissen kann die Komponente **K1** weiterhin gegebenenfalls nicht reaktive thermoplastische Materialien enthalten, wie beispielsweise Homo- oder Copolymere von ungesättigten Monomeren, insbesondere ausgewählt aus der Gruppe umfassend Ethylen, Propylen, (Meth)acrylsäure und deren Ester, Vinylester und Vinylalkohol. Insbesondere eignen sich hierfür Copolymere Ethylenvinylacetat (EVA) sowie ataktische Poly-α-olefine(APAO), Polypropylen (PP) oder Polyethylen (PE).

Als weitere Bestandteile der Komponenten **K1** und/oder **K2** sind die dem Fachmann für reaktive Heissschmelzklebstoffe, insbesondere für reaktive Polyurethan-Heissschmelzklebstoffe, hierfür bekannten Zusätze wie Weichmacher, Füllstoffe, Haftvermittler, UV-Absorptionsmittel, UV- oder und Wärmestabilisatoren, Antioxidantien, Flammschutzmittel, optische Aufheller, Katalysatoren, Farbpigmente oder Farbstoffe, möglich.

Als Katalysatoren sind für Isocyanat-Gruppen aufweisende Prepolymere insbesondere Amine oder organische Metallverbindungen der Metalle Zinn, Zink oder Bismut geeignet. Als organische Metallverbindungen sind insbesondere Dibutylzinndilaurat (DBTL) bevorzugt.

Falls der Heissschmelzklebstoff Alkoxysilan-Gruppen aufweisende Prepolymere aufweist, sind Katalysatoren, welche die Hydrolyse und/oder Vernetzung von Alkoxysilan-Gruppen katalysieren, geeignet. Solche Katalysatoren umfassen beispielsweise Titanate.

In einer bevorzugten Ausführungsform ist der Heissschmelzklebstoff, insbesondere der zweikomponentige Polyurethan-Heissschmelzklebstoff, frei von Russ. Russ wird, insbesondere in der Polyurethanchemie, insbesondere bei konventionellen einkomponentigen Polyurethanklebstoffen oder bei einkomponentigen Polyurethan-Warmmelts, vielfach als Füllstoff zugesetzt, um die Mechanik des Klebstoffes zu verbessern, sowie um die niedrig viskosen Klebstoffe standfest zu machen. In einer weiteren bevorzugten Ausführungsform ist der Klebstoff frei von anorganischen Füllstoffen. Derartige Russ-gefüllte Klebstoffe eignen sich jedoch schlecht bei denjenigen Anwendungen, in denen die Ästhetik der Verklebungen als wichtig eingestuft wird, und bei denen zumindest eines der zu verklebenden Substrate durchsichtig oder durchscheinend ist. In der bevorzugten Ausführungsform eines Russ-freien, beziehungsweise eines anorganischen füllstofffreien zweikomponentigen Heissschmelzklebstoffes, insbesondere eines Russ-freien, beziehungsweise eines anorganischen füllstofffreien zweikomponentigen Polyurethan-Heissschmelzklebstoffes, sind derartige Anwendungen jedoch möglich, ohne dass die Mechanik oder Applikation negativ beeinflusst wird.

In einer bevorzugten Ausführungsform umfasst die Komponente **K1** ein Polyurethanprepolymer aus einem Polyesterpolyol und einem Polyisocyanat und ist frei von Füllstoffen.

Die Komponente **K2** enthält mindestens Wasser. Um eine gute Einarbeitung des Wassers in die Komponente **K1** zu erhalten, ist es vorteilhaft, wenn die Komponente **K2** ein Trägermittel enthält, das einerseits die Viskosität der Komponente **K2** erhöht und andererseits das Mischverhältnis vorteilhaft beeinflusst. Aufgrund der geringen Menge von Wasser, welche für die beschleunigte Härtung nötig ist, und eine derartig kleine Einmischung allenfalls zu Problemen der homogenen Einmischung führen kann, wird durch die Verwendung eines Trägermaterials das Volumenverhältnis **K1** zu **K2** verkleinert, so dass die Mischprobleme verringert werden. Weiterhin ist bekannt, dass die Vermischung von zwei in der Viskosität drastisch unterschiedlichen Komponenten mit Schwierigkeiten verbunden ist. Diese Schwierigkeit wird durch die Verwendung eines Trägermaterials reduziert. Das Trägermaterial ist vorteilhaft ein organisches Polymer mit ionischen Gruppen. Derartige ionische Gruppen sind insbesondere Carbonsäure-Gruppe und/oder Sulfonsäure-Gruppen. Einerseits vorteilhaft als derartige organische Polymere sind Poly(meth)acrylsäuren sowie Copolymeren von (Meth)acrylsäuren. Besonders vorteilhaft ist das Trägermaterial ein Polyurethan mit mindestens einer Carbonsäure-Gruppe und/oder Sulfonsäure-Gruppe. Als besonders geeignet als Trägermaterialien haben sich Polyurethane, zu deren Synthese Carbonsäuregruppen enthaltende Diole, insbesondere Dimethylolpropancarbonsäure, sowie Polyisocyanate verwendet werden. Unter Verwendung derartiger Trägermaterialien wird das Wasser durch das Trägermaterial mit ionischen Gruppen reversibel gebunden und bildet eine gelartige Paste.

Die Menge von Wasser in Bezug auf die feuchtigkeitsreaktiven Gruppen kann von unterstöchiometrisch bis überstöchiometrisch sein, insbesondere geeignet ist ein Verhältnis der reaktiven Gruppen [H₂O]/[NCO] oder [H₂O]/[an Silizium gebundenes Alkoxy] von 1 bis 3.0, insbesondere 1 bis 2.6. Bevorzugt wird unterstöchiometrisch, insbesondere mit einem Verhältnis von 1 bis 2.

Es bestehen weitere Möglichkeiten eine Wasserpaste zu formulieren. Hierbei wird Wasser mit feinen Füllstoffen wie pyrogener Kieselsäure, wie beispielsweise Aerosil®, erhältlich von Degussa, oder Kreide oder Molekularsiebe. Hierbei wird durch das Wasser an den Oberflächen oder in den Poren der Füllstoff reversibel gebunden.

Bevorzugt als Trägermittel sind jedoch Wasserpaste sind organische Polymere mit ionischen Gruppen.

Wasserpasten mit organischen Polymeren, welche ionische Gruppen enthalten und für den Einsatz gemäss vorliegender Erfindung als Komponente K2 eingesetzt werden können, sind grundsätzlich bereits bekannt und werden beispielsweise Sikaflex®-254 oder SikaTack®-Plus, welche einkomponentige Warmmelt-Polyurethanklebstoff sind, im Sikaflex®-254 Booster System oder SikaTack®-Plus Booster System beigemischt.

Es kann vorteilhaft sein, wenn die Komponente neben Wasser zusätzlich Polyole und/oder Polyamine enthalten. Dies kann beispielsweise dazu führen, dass die Durchhärtung noch schneller erfolgt und schneller die Endfestigkeit erreicht wird.

Die Komponenten werden miteinander gemischt, vorzugsweise in einem Volumen-Mischverhältnis **K1** zu **K2** von 200 bis 10, insbesondere von 150 bis 20, bevorzugt 100 bis 30.

Die Komponente **K1** und **K2** werden voneinander getrennt gelagert. Dieses von einander getrennte Lagern umfasst jedoch auch das Lagern in Verpackungen, welche zwei miteinander durch mindestens eine Trennwand verbundenen Kammern aufweisen.

In einer Ausführungsform sind dies Doppelkartuschen, wie sie von Zweikomponenten-Klebstoffen her bekannt sind, wobei die Anordnung der Kammern unterschiedlich ausgestaltet sein kann. Beispielsweise können dies zylindrische Kammern sein, welche nebeneinander oder cozentrisch angeordnet sein können. Die Wandungen der Kammern können starr oder flexibel sein. Eine beispielhafte Anordnung der Kammern und deren Ausgestaltung lässt sich in WO 01/44074 oder in US 6,433,091 B1 finden.

In einer Ausführungsform kann die Komponente **K2** in einer Verpackung vorhanden sein, aus welcher die Komponente **K2** einem Strom von **K1** zudosiert und zugemischt wird. Ein Beispiel für eine derartige Verpackung beziehungsweise Zudosierung lässt sich beispielsweise in WO 95/24556 finden. Derartige Verpackungs-/Dosiervorrichtungen werden vorteilhaft auf einen Kartuschenausgang aufschraubt oder auf eine Auslassöffnung einer Klebstoffpumpe.

In einer weiteren Ausführungsform erfolgt die Zumischung der Komponente **K2** zur Komponente **K1** und Vermischung mit Hilfe eines dynamischen Mischers.

In einer weiteren Ausführungsform wird die Komponente **K2** zur Komponente **K1** eingedüst, insbesondere über eine Mehrzahl von verteilten Düsen und anschliessend gemischt.

Die Einmischung der Komponente **K2** in die Komponente **K1** kann homogen erfolgen oder in Schichten. Schichten werden insbesondere dann erhalten, wenn eine geringe Anzahl, typischerweise zwischen 3 und 10, Mischelemente in einem Statikmischer angeordnet sind.

Ist eine homogene Einmischung erwünscht, werden vorzugsweise entweder ein dynamischer Mischer oder mehrere Mischelemente, typischerweise mehr als 12, insbesondere mehr als 15 Mischelemente, in einem Statikmischer verwendet.

Bevorzugt weist ein mit dem Heissschmelzklebstoff verklebter Zugscherprüfkörper (20mm*20mm Klebefläche, 1mm Klebschichtdicke) nach 10 Minuten nach der Klebstoffapplikation (Probekörperfügung innerhalb von 10 Sekunden nach Klebstoffapplikation) eine Zugfestigkeit bei einer Messgeschwindigkeit von 10 mm/min von mehr als 0.6 MPa, insbesondere von mehr als 0.7 MPa, auf.

Es hat sich gezeigt, dass sehr gute Resultate mit einem Verfahren zur Applikation des zweikomponentigen Heissschmelzklebstoff, insbesondere eines Polyurethanheissschmelzklebstoffes, umfassend die folgenden Schritte erzielt werden können:
- Aufheizen der Komponente **K1** auf eine Temperatur von 85°C bis 180°C, insbesondere auf eine Temperatur von 120°C bis 150°C,
- Zumischen der Komponente **K2** zur Komponente **K1**
- Applizieren des gemischten Heissschmelzklebstoffes auf eine Oberfläche eines zu verklebenden Substrates **S1**
- Fügen mit einem zweiten Substrat **S2,** welche aus demselben oder unterschiedlichem Material wie das Substrat **S1** besteht.

Die Substrate **S1** und **S2** können eine Vielzahl von Materialien darstellen. Insbesondere eignen sich Kunststoffe, organische Materialien wie Leder, Stoffe, Papier, Holz, Harz gebundene Holzwerkstoffe, Harz-Texil-Compositewerkstoffe, Glas, Porzellan, Keramik sowie Metalle, insbesondere lackierte Metalle.

Als Kunststoffe eignen sich insbesondere Polyvinylchlorid (PVC), Acrylonitril-Butadien-Styrol-Copolymere (ABS), SMC (Sheet Molding Composites), Polycarbonat (PC), Polyamid (PA), Polyester (PE), Polyoxymethylen (POM), Polyolefine, insbesondere Polyethylen (PE) oder Polypropylen (PP), bevorzugt mit Plasma, Corona oder Flammen oberflächenbehandeltes PP oder PE.

Als bevorzugte Materialien für die Substrate **S1** und **S2** gelten Metalle und Polyolefine, insbesondere lackierte Metalle und mit Plasma, Corona oder Flammen oberflächenbehandeltes Polypropylen oder Polyethylen.

Die erfindungsgemässen Klebstoffe eignen sich insbesondere als Montageklebstoffe. Als ein "Montageklebstoff" wird in diesem Dokument ein Klebstoff bezeichnet, welcher einen schnellen Festigkeitsaufbau besitzt, so dass er dazu geeignet ist, Teile zu verkleben, welche nach kurzer Zeit nach der Klebstoffapplikation bereits bewegt werden müssen. Der Klebstoff muss deshalb in der Lage sein, nach kurzer Zeit bereits Kräfte zwischen den Fügepartnern zu übertragen. Typischerweise werden Montageklebstoffe in der industriellen Fertigung verwendet, insbesondere in einem Fliessband-Prozess. Besonders bevorzugt ist die Verwendung des Klebstoffs in Bau von Transportmittel, insbesondere von Fahrzeugen, besonders bevorzugt von Automobilen.

So können beispielsweise vorfabrizierte Module an eine Karosserie eines Fahrzeugs mit dem erfindungsgemässen Heissschmelzklebstoff angeklebt werden.

Als eine besonders bevorzugte Anwendung gilt die Anwendung als Montageklebstoff für das dickschichtige Verkleben von feuchtigkeitsundurchlässigen Materialien.

Dieses Verfahren eignet sich insbesondere für das Erstellen von dicken Verklebungen, insbesondere dicker als 1 mm, bevorzugt mehr als 5 mm. Bei diesen Schichtdicken härten konventionelle reaktive Heissschmelzklebstoffe extrem langsam, wenn überhaupt, aus, da die Aushärtung durch die Diffusion der Luftfeuchtigkeit durch den Klebstoff kontrolliert wird. Diese Diffusion wird durch das Ausbilden einer Haut von ausgehärtetem Klebstoff am Rand der Verklebung weiter reduziert, so dass der unreagierte Klebstoff im Kern noch langsamer aushärtet. Bei den Polyurethanprepolymeren, wie sie für die reaktiven Heissschmelzklebstoffe verwendeten werden, ist diese Haut extrem feuchtigkeitsundurchlässig und wirkt deshalb vielfach als Diffusionssperrschicht.

Für die Mechanik eines verklebten Verbundkörpers ist jedoch auch der Kern der Klebschicht massgebend. Die Diffusionsproblematik wird weiterhin noch verstärkt, wenn feuchtigkeitsundurchlässige Materialen, insbesondere flächig, verklebt werden. Denn hier kann die Luftfeuchtigkeit lediglich über die Seitenkante der Verklebung, wo der Klebstoff nicht von diesem Material bedeckt ist, in das Innere des Klebstoffs eindiffundieren. Aufgrund der hierbei auftretenden Wegstrecken härten derartige Verklebungen nur nach extrem langen Zeiten vollständig aus.

Somit gilt als eine weitere besonders bevorzugte Anwendung das Verkleben von Teilen, bei dessen Verbund nach dem Fügen die Klebstoffschicht eine kleine Oberfläche aufweist, welche in direktem Kontakt zur Umgebungsluft und damit zur Luftfeuchtigkeit besteht.

Eine bevorzugte Anwendung ist die Herstellung von Sandwich-Panels. So werden beispielsweise Polymerplatten, insbesondere Polymerschaumplatten, mit Platten, insbesondere mit Metallbleche, grossflächig, typischerweise beidseitig, verklebt. Derartige Sandwich-Panels werden insbesondere zur Strukturverstärkung oder zur Isolation gegen Wärme oder Kälte verwendet und kommen insbesondere im Bau von Lager- oder Transport-Containern oder im Fahrzeugbau, insbesondere im Lastkraftwagenbau oder Bahnwaggonbau oder Schiffsbau, zur Anwendung.

Bei den erfindungsgemässen Klebstoffen sind derartige durch Diffusion bedingte Schwierigkeiten nicht mehr vorhanden. Und somit eigenen sich die erfindungsgemässen Klebstoffe insbesondere für Verklebungen mit grossen Schichtdicken oder grossflächigen Verklebungen sowie für das Verkleben von feuchtigkeitsundurchlässigen Materialien. Hierbei ist vorzugsweise zumindest eines der Substrate **S1** oder **S2** feuchtigkeitsundurchlässig. Bevorzugt sind beide Substrate **S1** und **S2** feuchtigkeitsundurchlässig.

Besonders überraschend hat sich erweisen, dass dieses Applikationsverfahren sich dieses Verfahren auch für Temperaturen der Komponente **K1** über 100 °C eignet. Somit ist dieses Verfahren für den Einsatz von Heissschmelzklebstoffen mit Anwendungstemperaturen von über 100°C, typischerweise zwischen 100°C und 180 °C, insbesondere zwischen 120°C und 150°C, geeignet.

Mittels der erfindungsgemässen Klebstoffe lassen sich höhere Anfangsfestigkeiten als mit bekannten reaktiven Heissschmelzklebstoffen oder beschleunigten, beispielsweise mit Wasserpasten beschleunigten, Warmmelt-Polyurethanklebstoffen erreichen. Somit sind die Zeiten zwischen Klebstoffapplikation und Handhabung der verklebten Substrate, d.h. der Verbundkörper, stark verkürzt, was sich in einer kürzeren Taktzeit in einer industriellen Anwendung äussert und andererseits sind die Endfestigkeiten im Vergleich zu einkomponentigen Heissschmelzklebstoffen bedeutend schneller erreicht.

Eine hohe Frühfestigkeit, beziehungsweise ein hoher Wärmestand nach sehr kurzer Zeit nach Applikation ist jedoch eine vermehrte Forderung für industrielle Applikationen, insbesondere als Montageklebstoffe.

Durch die Unabhängigkeit von der Diffusion der Luftfeuchtigkeit aus der Umgebung in den Klebstoff ist der erfindungsgemässe Klebstoff somit unabhängig von der relativen Luftfeuchtigkeit der Umgebungsluft. Es hat sich nämlich gezeigt, dass bei den erfindungsgemässen zweikomponentigen Polyurethan-Heissschmelzklebstoffen, im Gegensatz zu den klassischen reaktiven Polyurethan- Heissschmelzklebstoffen und -Warmmelts, die Anfangsfestigkeit durch die geringe Luftfeuchtigkeit, wie sie typischerweise im Winter vorkommen, nicht negativ beeinflusst wird.

Die Komponente **K1,** in welcher die feuchtigkeitsreaktiven Gruppen Alkoxysilan-Gruppen sind, kann als Heissschmelzklebstoff verwendet werden.

Der Vorteil der Verwendung von Isocyanat- und/oder Alkoxysilan-Gruppen als feuchtigkeitsreaktive Gruppen liegt darin, dass diese Gruppen auch mit Luftfeuchtigkeit reagieren und dadurch vernetzen können. Somit ist ein derartiger Heissschmelzklebstoff, ganz im Gegensatz zu anderen zweikomponentigen Klebstoffsystemen, weniger kritisch bezüglich Mischfehlern von Einmischung der Komponente **K2** in Komponente **K1.**

Weiterhin ist es aus arbeitshygienischen und ökotoxischen Gründen vorteilhaft, dass zumindest ein Anteil der Feuchtigkeitsreaktiven Gruppen, insbesondere der Isocyanat-Gruppen, bereits während der Applikation abreagieren und somit der NCO-Gehalt bei der Applikation gegenüber einer Applikation der Komponente **K1** allein, bereits stark abgenommen hat.

### Beispiele

Es wurden mit einem reaktiven Polyurethan-Heissschmelzklebstoff (SikaMelt® 9640/45, kommerziell erhältlich bei Sika Tivoli GmbH, Hamburg), dessen Polyurethanprepolymer eine Viskosität (Brookfield Spindel 27, 10 UpM) von 6600 mPas bei 100°C, beziehungsweise 2600 mPas bei 130°C, besitzt, und einem ,Warmmelt'-Polyurethanklebstoff (SikaTack®-Plus kommerziell erhältlich bei Sika Schweiz AG) Zugscherfestigkeitsprobekörper auf ungeschliffener und nicht weiter vorbehandelter Buche (Rocholl GmbH, Deutschland) mit einer Verklebungsfläche von 20mm*20mm und einer Klebstoffschichtdicke von 1 mm hergestellt. Hierbei wurde der jeweilige Klebstoff in einer Kartusche in einem Ofen auf 85°C aufgeheizt und mit oder ohne Beimischung einer Wasserpaste (Sika® Booster kommerziell erhältlich bei Sika Schweiz AG) auf das Holzsubstrat appliziert und sofort (d.h. innerhalb von maximal 10 Sekunden) zum Probekörper gefügt. Nach 6 min, 10 min und 20 min wurde die Zugscherfestigkeit mit einer Messgeschwindigkeit 10 mm/min auf einer Zugprüfmaschine (Zwick, Deutschland) gemessen.

**Tabelle 1 Entwicklung der Zugfestigkeit.**

| ZugscherFestigkeit nach | SikaTack®-Plus | SikaTack®-Plus +Wasserpaste | SikaMelt® 9640/45 | SikaMelt® 9640/45 +Wasserpaste |
|---|---|---|---|---|
| | **Ref. 1** | **Ref.2** | **Ref. 3** | **1** |
| 6 min [MPa] | 0.02 | 0.02 | 0.47 | 0.53 |
| 10 min [MPa] | 0.02 | 0.03 | 0.52 | 0.78 |
| 20 min [MPa] | 0.03 | 0.06 | 0.65 | 0.89 |

Tabelle 1 zeigt, dass der erfindungsgemässe zweikomponentige Polyurethan-Heissschmelzklebstoff **1** einen ausserordentlich starken und schnellen Festigkeitsanstieg im Vergleich zum gleichen einkomponentigen Polyurethan-Heissschmelzklebstoff, das heisst ohne Wasserzusatz, aufweist.

Weiterhin zeigen die Resultate der Tabelle 1, dass beim Warmmelt-Polyurethanklebstoff **Ref. 2** und **Ref. 1** sich die Anfangsfestigkeiten mit und ohne Wasserzusatz auf einem extrem tiefen Niveau befinden.

## Patentansprüche

1. Zweikomponentiger Heissschmelzklebstoff bestehend aus zwei Komponenten **K1** und **K2, dadurch gekennzeichnet,**
**dass** die Komponente **K1** mindestens ein Prepolymer enthält, welches mindestens zwei feuchtigkeitsreaktive Gruppen aufweist und welches bei Raumtemperatur fest ist;
und
**dass** die Komponente **K2** mindestens Wasser enthält.

2. Zweikomponentiger Heissschmelzklebstoff gemäss Anspruch 1, **dadurch gekennzeichnet, dass** die feuchtigkeitsreaktiven Gruppen Isocyanat-Gruppen sind.

3. Zweikomponentiger Heissschmelzklebstoff gemäss Anspruch 1, **dadurch gekennzeichnet, dass** die feuchtigkeitsreaktiven Gruppen Alkoxysilan-Gruppen sind.

4. Zweikomponentiger Heissschmelzklebstoff gemäss Anspruch 2, **dadurch gekennzeichnet, dass** das Prepolymer mit mindestens zwei feuchtigkeitsreaktive Gruppen ein mindestens zwei Isocyanat-Gruppen aufweisendes Polyurethanprepolymer ist, welches durch eine Reaktion von mindestens einem Polyisocyanat und mindestens einem Polyetherpolyol und/oder mindestens einem Polyesterpolyol in einem stöchiometrischen Isocyanat-Gruppen Überschuss hergestellt wird.

5. Zweikomponentiger Heissschmelzklebstoff gemäss einem der Ansprüche 1 bis 4, **dadurch gekennzeichnet, dass** die Komponente **K1,** insbesondere das Prepolymer mit mindestens zwei feuchtigkeitsreaktiven Gruppen der Komponente **K1,** eine Viskosität bei 100°C von nicht weniger als 5000 mPas, insbesondere von nicht weniger als 50'000 mPas, aufweist.

6. Zweikomponentiger Heissschmelzklebstoff gemäss einem der vorhergehenden Ansprüche, **dadurch gekennzeichnet, dass** der Heissschmelzklebstoff frei von Russ ist.

7. Zweikomponentiger Heissschmelzklebstoff gemäss einem der vorhergehenden Ansprüche, **dadurch gekennzeichnet, dass** die Komponente **K2** mindestens ein organisches Polymer mit ionischen Gruppen enthält.

8. Zweikomponentiger Heissschmelzklebstoff gemäss Anspruch 7, **dadurch gekennzeichnet, dass** das organische Polymer mit ionischen Gruppen ein Polyurethan mit mindestens einer Carbonsäure-Gruppe und/oder Sulfonsäure-Gruppe ist.

9. Zweikomponentiger Heissschmelzklebstoff gemäss einem der vorhergehenden Ansprüche, **dadurch gekennzeichnet, dass** das Verhältnis der Volumen von Komponente **K1** zu Komponente **K2** von 200 bis 10, insbesondere von 150 bis 20, bevorzugt von 100 bis 30, beträgt.

10. Verfahren zur Applikation eines zweikomponentigen Heissschmelzklebstoffes gemäss einem der Ansprüche 1 bis 9, **dadurch gekennzeichnet, dass** es die folgenden Schritte umfasst
- Aufheizen der Komponente **K1** auf eine Temperatur von 85°C bis 180°C
- Zumischen der Komponente **K2** zur Komponente **K1**
- Applizieren des gemischten Heissschmelzklebstoffes auf eine Oberfläche eines zu verklebenden Substrates **S1**
- Fügen mit einem zweiten Substrat **S2,** welche aus demselben oder unterschiedlichem Material wie das Substrat **S1** besteht.

11. Verfahren gemäss Anspruch 10, **dadurch gekennzeichnet, dass** die Temperatur der Komponente **K1** 120°C bis 150°C beträgt.

12. Verfahren gemäss Anspruch 10 oder 11, **dadurch gekennzeichnet, dass** das Substrat **S1** und/oder **S2** ein Metall, insbesondere ein lackiertes Metall, oder ein Kunststoff, insbesondere ein Polyolefin, insbesondere ein mit Plasma, Corona oder Flammen oberflächenbehandeltes Polypropylen oder Polyethylen, ist

13. Verfahren gemäss einem der Ansprüche 10 bis 12, dass zumindest eines der Substrate **S1** oder **S2,** bevorzugt beide Substrate **S1** und **S2,** feuchtigkeitsundurchlässig sind.

14. Verbundkörper, welcher durch ein Verfahren gemäss einem der Ansprüche 10 bis 13 erhalten wird.

15. Verwendung einer Komponente **K1** gemäss einem der Ansprüche 1 bis 9 als Heissschmelzklebstoff, in welcher die feuchtigkeitsreaktiven Gruppen Alkoxysilan-Gruppen sind.

16. Verwendung eines zweikomponentigen Heissschmelzklebstoff gemäss einem der Ansprüche 1 bis 9 als Montageklebstoff.

17. Verwendung eines zweikomponentigen Heissschmelzklebstoff gemäss einem der Ansprüche 1 bis 9 als Klebstoff im Sandwich-Panel-Bau.
